# EUROPEAN PATENT APPLICATION

(11) **EP 3 171 318 A1**
(43) Date of publication of application: **24.05.2017**
(21) Application number: 16199866.1
(22) Date of filing: 21.11.2016
(51) Int. Cl.: G06Q 20/34

(54) **SYSTEM FOR PROVIDING NEAR REAL-TIME STORE CREDIT TRANSFERS**

(30) Priority: 20.11.2015 US 201562258275 P; 13.07.2016 US 201615208949
(71) Applicant: Paymize, Inc., Pittsburgh, PA 15238 (US)
(72) Inventor: Tejapaibul, Vorachai, Pittsburgh PA 15238 (US); Boonsaeng, Napat, Pittsburgh PA 15238 (US); Kittipatkul, Park, Foster City CA 94404 (US)
(74) Representative: Shipp, Nicholas

(57) **Abstract**

A store credit marketplace platform that may act as a secondary marketplace for purchasing gift cards, value cards, and/or store credit in near real time. In some cases, the system may include an application operating on a customer device. The application and the store credit marketplace platform may to enable a customer to request a desired amount of store credit valid at the third party retailer establishment, receive a quote including various offers to purchase the store credit at discounted pricing, the ability to purchase one or more of the offers, and receive and redeem the store credit in near real using the device at the retail establishment

## Description

### CROSS-REFERENCE TO RELATED APPLICATION(S)

This application is a non-provisional of and claims priority to Provisional Application No. 62/258,275, mailed on November 20, 2015, and entitled "Value Card Exchange," the entirety of which is incorporated herein by this reference thereto.

### BACKGROUND

Gift cards, value cards, and store credit as a payment infrastructure has been adopted by most retailers in today's market. In many cases, the electronic form of a gift card or store credit can be delivered electronically without the need of the physical cards. As gift cards continue to gain popularity, more and more consumers give gift cards as a present instead of traditional items. As a result, many consumers receive gift cards that the consumers have no immediate use for. In many cases, the consumer would rather convert these gifts cards into cash, even at a discounted rate.

### BRIEF DESCRIPTION OF THE DRAWINGS

The detailed description is set forth with reference to the accompanying figures. In the figures, the left-most digit(s) of a reference number identifies the figure in which the reference number first appears. The use of the same reference numbers in different figures indicates similar or identical items.
FIG. 1 illustrates an example architecture of a system configured to facilitate near real time store credit transfer according to some implementations.
FIG. 2 illustrates an example flow diagram showing an illustrative process for providing store credit to a user according to some implementations.
FIG. 3 illustrates another example flow diagram showing an illustrative process for providing store credit to a user according to some implementations.
FIG. 4 illustrates an example flow diagram showing an illustrative process for purchasing store credit according to some implementations.
FIG. 5 illustrates another example flow diagram showing an illustrative process for purchasing store credit according to some implementations.
FIG. 6 illustrates another example flow diagram showing an illustrative process for processing an authorized store credit transaction according to some implementations.
FIG. 7 illustrates an example store credit marketplace for providing a store credit marketplace according to some implementations.
FIG. 8 illustrates an example user device for accessing the store credit marketplace according to some implementations.

### DETAILED DESCRIPTION

Described herein are devices and techniques for providing electronic systems and platforms that may act as a secondary marketplace for gift cards, value cards, and/or store credit. In some cases, the system may allow a customer at a third party retailer to access the system (for instance, via a smart phone or other electronic device) to purchase a desired amount of credit valid at the third party retailer's establishment, and receive the credit in near real time (e.g., quickly enough for the customer to use the credit to complete a purchase or transaction at the third party retailer before exiting the establishment). Thus, in embodiments of the system described herein, the consumer no longer needs to plan ahead of time how much store credit to bring to the third party retailer or even have access to the store credit at the time the customer beings shopping. In addition, the system facilities both a discount (e.g., the store credit is sold at or below face value by other individuals that have no use for the credit) and electronic transfer of store credit via a single platform, thereby, improving the overall system of store credit transfer and reducing the overhead associated with maintaining multiple electronic systems and online portals.

In some cases, the amount the customer requires to complete a transaction for a particular retail purchase may not match an amount available on any combination of gift cards offered (e.g., $10, $15, $20, etc.). Thus, in some cases, the customer will overpay (e.g., purchase $25 worth of credit for a $23.45 sale) or only complete part of the transaction via store credit (e.g., paying $20 in store credit and $3.45 in cash for a $23.45 purchase). In some implementations, the system described herein, may search the store credit for the third party retailer available via the system and/or via other marketplaces and present the customer an offer to purchase the exact amount necessary to complete the transaction (e.g., $23.45) regardless of the value requested.

Alternatively, the marketplace may present multiple quotes that are close to the amount requested. In some examples of this system, the customer may enter a desired amount and receive a list of offers to purchase the desired amount at various cash values. Thus, the customer is no longer required to browse gift card marketplaces, auction sites, or other resale venues and manually locate and combine a number of available cards in order achieve an amount that is close to the purchase price. In addition to identifying and aggregating the store credit, in some cases, the system may present the customer with a quote including a total amount due, a discount amount (e.g., the difference between the face value of the credit and the cash price being paid), and/or discount percentages for the customer.

In one particular example, once a customer has purchased an amount of store credit, the system may deliver the credit in a format which is easy for the customer to receive and use while at the third party retailer's establishment. For example, the system may transfer the store credit to one or more gift cards identified and/or known to be held by the customer (e.g., the user may enter a unique card identifier and the system may electronically transfer the credit to the card or a database responsible for storing the amount associated with the card), electronically transfer the credit to the user at a database associated with the third party retailer (e.g., an account tied to the customer's phone number or social security number), generate a scanable code (e.g., a bar code or QR code) and transfer the scanable code to the device used to purchase the store credit, among others. In some cases, the system may also provide and/or cause instructions to be displayed on the device used to purchase the store credit, in order to assist the customer and/or the third party retailer's cashier on how to process the credit.

In one instance, the store credit transfer platform may include a store credit marketplace for facilitating store credit purchase and sale transactions between the system and a purchaser, the system and a seller of store credit, a seller and a purchaser (e.g., an individual selling store credit via the marketplace and a second individual purchasing store credit via the marketplace), a third party marketplace and a purchaser, a third party marketplace and a seller, and/or a combination thereof. For example, a consumer may be shopping at a third party retail establishment. The consumer may identify an item having a price that the consumer desires to purchase from the third party retailer. While at the establishment, the consumer may utilize a device (such as a smart phone) to access the system in order to purchase store credit with the third party retailer at a discounted price. In some cases, the consumer may open or initiate an application or module installed on the device, select the third party retailer as the entity to obtain credit at, and an entire amount equal to the price (e.g., the amount for which the customer desires to obtain store credit). For example, the consumer may type, say, or otherwise provide input to enter the amount, while in other cases the consumer may utilize the device to photograph the price or scan a bar code or QR code associated with one or more items, including the item, or a shopping cart including the item to cause the device or the system to locate the price.

The amount may then be received via a network and/or one or more communication interfaces of the device and/or the system. The system may then access available credit (e.g., credit for the store already purchased by the system) at one or more credit databases. In some cases, if the previously purchased credit is insufficient, the system may access third party marketplace(s) to obtain additional store credit. In some cases, the system may aggregate multiple store credits from the inventory or third party marketplace to accommodate the amount requested by the customer. In some cases, the system may find store credit for sale at the lowest cash value (e.g., the highest or most appropriate savings for the customer) that meets the amount specified by the customer. In some cases, the store value may come from one or more sources. For example, if the amount to purchase the item was $23.45, the system may identify store credit in inventory for $8.45 and a $15.00 gift card available on a third party marketplace and present the combination as a quote with a single price to the customer via the customer device.

In one specific example, the system searches the inventory or available credit databases and the external third party marketplaces to collect availability data on store credit value, cash selling price, discount percentage, delivery methods and timing, among others. The system then utilizes the data collected to prepare one or more quotes that are suitable for the customer. For example, the suitability may be based on one or more thresholds, such as cash price, total discount percentage (e.g., 10% savings), total aggregated store credit (e.g., exact amount, above or below the amount requested), the amount of store credit requested, total cash discount value (e.g., $5 savings), delivery methods, delivery time, reliability of system's previous interaction with the specific third party marketplace, reputation of the specific third party marketplace, and/or any special relationship between the third party retailer, the system, the specific third party marketplace, the customer, and/or a combination thereof.

In some implementations, the system may provide the device with multiple quotes. For example, the system may provide the device with quotes to present to the user for the exact value equal to the amount, the closest single store credit source to the amount, a highest savings (e.g., the best value to the customer even if the store credit is greater than the amount), etc. In some cases, the system may also provide a list of sources for the store credit and some information about the source (e.g., a reputation, reviews, free trade, eco-friendly, location, etc.), such that the customer may select the desired source.

In some implementations, the customer may also provide a maximum cash value the customer is willing to pay for the store credit. In these implementations, if the system is unable to prepare a quote for the customer for less than the maximum cash value indicated, the system may provide a list of quotes that are, for instance, best available options.

Once the credit is purchased by the system, the system may provide credit transfer instructions to a third party credit tracking system associated with the third party retailer. For example, the third party credit tracking system may include a database of the credit authorized and the owner of the credit, such that when the owner of the credit at an establishment uses a gift card representative of the credit or otherwise redeems the value, the third party credit tracking system may verify the authenticity of the redemption. In some cases, the store credit may be tied to a phone number, social security number, email address, biometric identifiers, or other unique customer identifier.

The third party credit tracking system may then return a credit transfer verification to the system. The system may also provide a credit transfer notification to the customer to notify them that the transaction is complete. For example, the system may provide an electronic representation of the store credit (such as a PIN or other code number to access the value stored at the third party credit tracking system) or instructions on how to redeem the store credit purchased. In other examples, the system may cause the device or the application installed on the device to overwrite a magnetic strip on a physical gift card, generate a bar code or other scanable representation of the gift card on the device display, reprogram on-cards chip, reprogram on card/credit device or application transmitted signals, (e.g., near field communications (NFC) or other EMV chips), etc. Thus, the customer may use the credit to purchase the item prior to exiting the establishment. Thus, the system provides the ability to identify, purchase, and use store credit in near real time.

While in the example above, the system purchases/aggregates the store credit in near real time, the system may continuously or periodically browse the third party marketplaces for available store credits to add to the inventory or available credit database. For example, at various times store credit holders may place or offer for sale one or more store credits via the store credit marketplace or system. While the system may use the offers made at the system to provide quotes to customers in addition to the third party marketplaces and the inventory in near real time as described above, the system may also review each offer for optional purchase to add to the inventory database. For instance, the system may utilize various criteria such as cash value over store credit value, discount percentage, the specific third party retailer the store credit is associated with (e.g., the system may purchase more store credit at a first retailer than with a second retailer), time of year/date (e.g., the system may purchase more store credit in November in anticipation of the Christmas Holiday), amount of store credit currently in inventory (e.g., a minimum or maximum store credit per retailer may increase or decrease the purchase price threshold), among others. Thus, the system may utilize one or more thresholds to automatically purchase store credit for inventory in addition to the real time purchasing of store credit in response to a customer request. It should also be understood, that the system may employ one or more web-crawlers or bots to identify and purchase store credit available at third party marketplaces in a manner similar to the offers made by individuals via the system.

In the implementations described above, the user may purchase store credit for a third party retailer via the store credit marketplace or system. However, in some cases, the user may purchase credit that is redeemable at multiple retailers (such as a gift card valid at all stores at a shopping mall, open loop credit, or debit cards). In other cases, the user may purchase some or all of the value in pre-paid cash cards. Additionally, the system described herein may be utilized to facilitate the buying and selling of domestic currency or foreign currency.

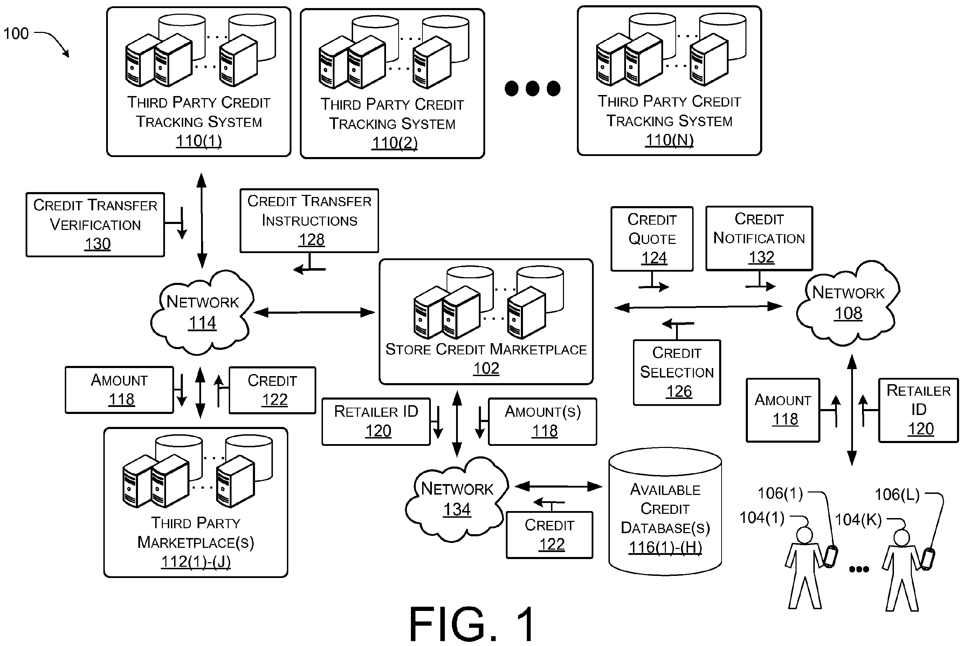

FIG. 1 illustrates an example architecture of a system 100 configured to facilitate near real time store credit transfer according to some implementations. As discussed above, the system 100 may facilitate a store credit marketplace 102 from which store credit may be purchased or sold by various entities. For instance, in the illustrated example, a user, such as users 104(1)-(K), may access the store credit marketplace 102 via a store credit application installed or operating on one or more devices 106(1)-(L), such as a mobile phone, smart phones, laptop computers, mobile computers, tablets, desktop computers, smart rings, smart watches, other wearables, biometrics, etc., associated with individual users 104(1)-(K).

In general, the store credit marketplace 102, as illustrated, is implemented as one or more cloud-based services hosted on servers. In general, cloud-based services refer to a network accessible platform implemented as a computing infrastructure of processors, storage, software, data access, and so forth that is maintained and accessible via a network such as the Internet. The cloud-based services do not require end-user knowledge of the physical location and configuration of the system that delivers the services. Common expressions associated with cloud services include "on-demand computing," "software as a service (SaaS)," "platform computing," "network accessible platform" and so forth. The store credit marketplace 102 may host any number of services for facilitating transactions related to store credit and delivering store credit to the devices 106(1)-(L).

The servers hosting the store credit marketplace 102 may include various types of computing devices and may be owned by a single entity and collocated at a common data center or may be located at separate data centers. Alternatively, the servers may be owned and operated by independent entities at separate locations. The servers may be further arranged in any number of ways, such as server farms, stacks, and the like that are commonly used in data centers.

In the illustrated example, the store credit marketplace 102 is shown as communicatively coupled to the devices 106(1)-(L) via a network 108, as well as third party credit tracking systems 110(1)-(N) and third party marketplaces 112(1)-(J) via network 114, and an available credit database 116(1)-(H) via network 134. In some cases, the store credit marketplace 102, the devices 106(1)-(L), the third party credit tracking systems 110(1)-(N), the third party marketplaces 112(1)-(J), and the available credit database(s) 116(1)-(H) may be communicatively coupled to the networks 108, 114, and 134 via wired technologies (e.g., wires, USB, fiber optic cable, etc.), wireless technologies (e.g., RF, cellular, satellite, Bluetooth, etc.), or other connection technologies. The networks 108, 114, and 116(1)-(H) are representative of any type of communication network, including data and/or voice network, and may be implemented using wired infrastructure (e.g., cable, CAT5, fiber optic cable, etc.), a wireless infrastructure (e.g., RF, cellular, microwave, satellite, Bluetooth, etc.), and/or other connection technologies. The networks 108, 114, and 134 carry data, such as store credit. In the illustrated example, the networks 108, 114, and 134 are shown as separate networks, however, in some cases, the networks 108, 114, and 134 may be the same network.

In the illustrated example, a user 104 may be physically present at a retail outlet and may be considering purchasing a retail item from the retail outlet. In some instances, the price of the retail item may be more than the user 104 desires to spend. Thus, the user 104 may access the store credit application and enter an amount 118 associated with the price of the retail item and a retailer name or ID 120. For example, the user 104 may scan a bar code, QR code, or other item identifier on the packaging of the retail item or on the item directly, to cause the application to identify the price or amount 118 of store credit the user 104 desires to purchase. In some cases, the application may also be able to identify the retailer name or ID 120 from the bar code. In other cases, the application may ask that the user 104 input the retailer name or ID 120 via the device 106.

The store credit marketplace 102 may receive the amount 118 and the retailer ID 120 from the device 106. The store credit marketplace 102 may access the available credit database 116(1)-(H) to determine if store credit 122 in the amount 118 for the retailer specified by the retailer ID 120 is available for distribution by the store credit marketplace 102. If the store credit 122 is available or had been previously purchased by the store credit marketplace 102, the store credit marketplace 102 may prepare a credit quote 124 including pricing or an amount of cash due in exchange for the amount 118 of store credit requested. In some cases, the credit quote 124 may represent a number of gift cards, amounts of each gift card, and total to be paid for the amount 118. For example, the store credit marketplace 102 may utilize three individual $25.00 gift cards to fulfill a $75.00 requested by the user 104 and present the three gift cards as part of the credit quote 124.

In some implementations, the credit quote 124 may include multiple offers having various different amounts, number of gift cards, and purchase prices. For instance, it should be understood, that at least some of the store credit purchased by the store credit marketplace 102 may be partially used and represent a value, such as $74.86, and the amount 118 and/or the price of the retail item may vary and include values such as $53.23, for example. Thus, it may be difficult to form an exact match between the amount 118 and the credit 122. To provide one illustrative example, the amount 118 may be for $75.50 and the credit 122 stored in the available credit database 116(1)-(H) may include two $40.00 gift cards and three $20.00 gift cards for the retailer identified by the retailer ID 120. In this example, the credit quote 124 may include a first offer for $80.00 worth of store credit and a second offer for $60.00 worth of store credit as the closest option over the amount 118 and the closest option below the amount 118.

If the user 104 accepts one or more of the offers within the credit quote 124, the user 104 may utilize the device 106 to send a credit selection 126 back to the store credit marketplace 102. The credit selection 126 may authorize the store credit marketplace 102 to transfer the store credit or gift card to the user 104 and to charge the user 102 for the price presented in the credit quote 124. For example, the store credit marketplace 102 may charge the user's 104 credit card for the value indicated in the credit quote 124. The store credit marketplace 102 may also electronically transfer the store credit to the ownership of the user 104. For example, the store credit marketplace 102 may issue credit transfer instructions 128 to the third party credit tracking system 110 associated with the retail identified by the retailer ID 120. In some cases, the third party credit tracking system 110 may include one or more systems associated with the retailer or a third party contract with the retailer to manage electronic store credit on behalf of the retailer. The third party credit tracking system 110 may provide a credit transfer verification 130 back to the store credit marketplace 102 to confirm transfer of the credit to the user 104, the device 106, or an account associated with the user 104. Once the credit transfer verification 130 is received by the store credit marketplace 102, the store credit marketplace 102 may send a credit notification 132 to the device 106. For example, the credit notification 132 may include instructions on how to access the credit via the device 106 (e.g., via an email from the retailer), notice that the credit is now associated with the user's 104 account at the retailer, etc.

In other examples, such as when the store credit marketplace 102 is transferring credit associated with a physical gift card, the store credit marketplace 102 may be able to transfer the credit electronically without accessing the third party credit tracking system 110. In this example, the store credit marketplace 102 may generate a bar code or other identifier representative of and usable to redeem the store credit to the device 106 via the application. Thus, the user 104 may in near real time request the amount 118, receive credit quotes 124, make a credit selection 126, purchase the credit, and receive the credit notification 132, such that the user 104 may utilize the store credit to purchase the retail item. For example, the user 104 may present the bar code representative of the store credit to a cashier at the retail establishment to scan and apply the credit to the purchase. Or the user 104 may inform the cashier of a credit associated with the user's 104 account at the retailer, and the cashier may apply the credit via a system associated with the retailer.

If the store credit 122 is not available or had not been previously purchased by the store credit marketplace 102, the store credit marketplace 102 may attempt to purchase store credit from one or more of the third party marketplaces 112(1)-(J). In this scenario, the store credit marketplace 102 may access the third party marketplaces 112(1)-(J) to determine an amount of credit available at the retailer, in what increments, and for what price. In some cases, the store credit marketplace 102 may purchase the credit 122 from the third party marketplaces 112(1)-(J) then provide the credit quote 124 to the user 104. In these cases, the credit quote 124 may include a firm offer to the user 104. In other cases, the credit quote 124 may be sent to the device 106 prior to purchasing the credit 124 from the third party marketplaces 112(1)-(J). In these other cases, the offer sent to the user 104 may be conditional upon obtaining the credit 122 from the third party marketplaces 112(1)-(J) following receipt of the credit selection 126 at the store credit marketplace 102.

In the examples, above the user 104 is attempting to purchase a single retail item. However, in other instances, the user 104 may be requesting an amount 118 representative of a purchase price of multiple retail items. In these cases, the user 104 may scan multiple bar codes associated with multiple items and the application may present a total amount 118 to the store credit marketplace 102.

Additionally, it should be understood, that the credit 122 may be transferred electronically, either via the third party credit tracking system 110(1)-(N) or by converting the credit identification to an unique identifier or other form (e.g., an electronic bar code) that may be sent to the device 106 and redeemed by the user 104. Thus, in some cases, the system 100 may reduce the overall data usage associated with transferring store credit from one individual or entity to another. For example, a user 104 no longer needs to send and receive information from any of the third party marketplaces 112(1)-(J) or any of the third party credit tracking systems 110(1)-(N). Further, the devices 106(1)-(L) no longer need to repeatedly load data associated with pages of any of the third party marketplaces 112(1)-(J) as the user 104 browses or manually pages through the available gift cards or store credit, thereby reducing the overall load on the store credit transfer systems. As discussed above, the system 100 prepares credit quotes 124 including multiple offers to the users 104(1)-(K) which, in some instances, the user 104 may view as a single page. The system 100 improves the physical system of third party store credit sales, as the store credit may be transferred electronically as a bar code, QR code, image data, audio files, voice data, biometric identifiers, wireless submittal signals, or other identifier that may be displayed on one or more of the devices 106, without requiring the seller to physically mail or deliver a gift card to the purchaser. In this manner, system 100 improves both the electronic transfer of store credit and the physical transferring of store credit.

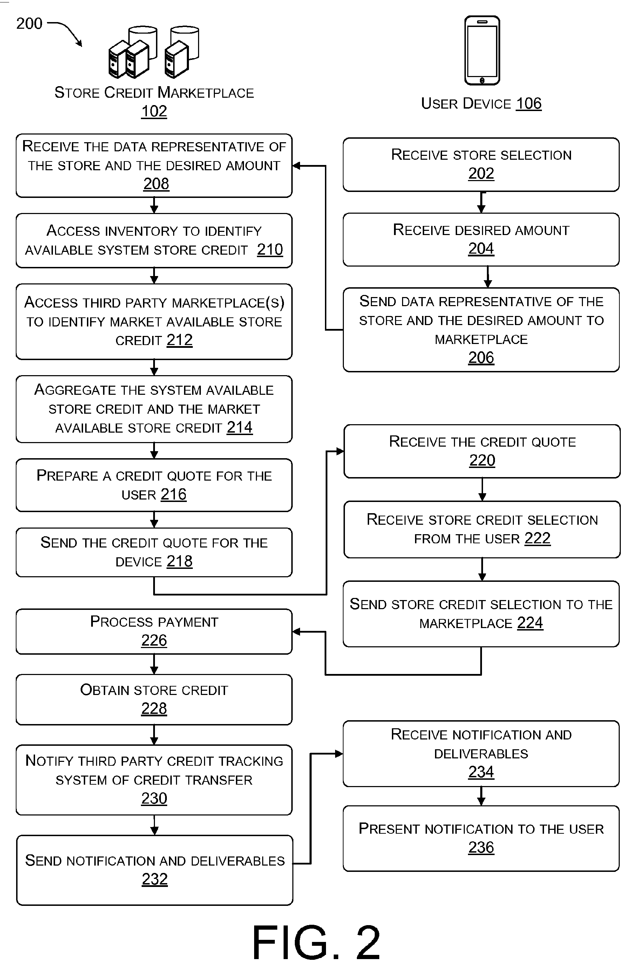

FIGS. 2-6 are flow diagrams illustrating example processes associated with the store credit marketplace 102 of FIG. 1 according to some implementations. The processes are illustrated as a collection of blocks in a logical flow diagram, which represent a sequence of operations, some or all of which can be implemented in hardware, software, or a combination thereof. In the context of software, the blocks represent computer-executable instructions stored on one or more computer-readable media that, which when executed by one or more processors, perform the recited operations. Generally, computer-executable instructions include routines, programs, objects, components, encryption, deciphering, compressing, recording, data structures and the like that perform particular functions or implement particular abstract data types.

The order in which the operations are described should not be construed as a limitation. Any number of the described blocks can be combined in any order and/or in parallel to implement the process, or alternative processes, and not all of the blocks need be executed. For discussion purposes, the processes herein are described with reference to the frameworks, architectures and environments described in the examples herein, although the processes may be implemented in a wide variety of other frameworks, architectures or environments.

FIG. 2 illustrates an example flow diagram showing an illustrative process 200 for providing store credit to a user according to some implementations. As described above, a store credit marketplace 102 may be configured to allow a customer to access the system (for instance, via user devices 106), purchase a desired amount of credit valid at a third party retailer's establishment, and receive the credit in near real time (e.g., quickly enough for the customer to use the credit to complete a purchase or transaction at the third party retailer before exiting the establishment).

At 202, the device 106 may receive a store selection or a retail establishment selection from a user. For example, the device 106 may host a store credit purchasing application. The application may allow the user to enter (e.g., type or input) a name of a retail establishment. In other examples, the device 106 may present the user with a selectable list of stores or retail establishments that store credit is available via the application and the store credit marketplace 102. In some cases, the user may sort the list provided by type of industry, type of goods, location, frequently used, most popular, etc. In one example, the user may scan an item or take a picture of an item available for purchase at a store the user is present in and the list may induce a list of stores at which the product is available. In some particular cases, the application may determine the store the user is located in based at least in part, on one or more of, the scanned bar code on the item, an image of the item, an image of the store logo, location data received from the device (for example via a GPS system on the device 106), among others.

At 204, the device 106 receives an input of a desired amount from the user. For example, the user may type or enter the desired amount using a user interface of the device 106. In other examples, the desired amount may be calculated from pricing information obtained when the bar code of the item or items were scanned by the user using the device 106.

At 206, the device 106 sends data representative of the store and the desired amount to the store credit marketplace 102 and, at 208, the store credit marketplace 102 may receive the data representative of the store and the desired amount. For example, the data representative of the store and the desired amount may be transmitted over one or more networks, including wireless and wired networks, from the device 106 to the store credit marketplace 102.

At 210, the store credit marketplace 102 may access inventory to identify available system store credit associated with the store indicated by the data representative of the store. For example, the store credit marketplace 102 may be configured to purchase store credit at a specified discount thresholds and to maintain the store credit in one or more inventory databases until a user sends a purchase request to the store credit marketplace 102. For instance, as discussed above, the store credit marketplace 102 may access an internal inventory or inventory list or an external credit database associated with the marketplace 102 to determine the credit available for sale that may be redeemed at the store.

At 212, the store credit marketplace 102 may access one or more third party marketplaces, such as third party marketplaces 112(1)-(J) of FIG. 1, to identify available market store credit that may be purchased by the store credit marketplace 102. For example, the store credit marketplace 102 may access the third party marketplaces 112(1)-(J) to determine if store credit may be obtained at a further discount compared to the store credit identified in inventory.

At 214, the store credit marketplace 102 may aggregate the system available store credit and the market available store credit. For example, the store credit marketplace 102 may rank or order the system available store credit and the market available store credit in order of lowest purchase price or greatest discount to the user.

At 216, the store credit marketplace 102 may prepare a credit quote for the user. The credit quote may include multiple offers to purchase the desired amount of store credit or amounts of store credit close to the desired amount. For example, the store credit marketplace 102 may combine various store credit amounts into offers having a total amount nearest to the desired amount. For instance, the store credit marketplace 102 may combine system store credit of $83.25 purchased for $70.00 with system store credit of $15.80 purchased for $12.00 to form a first offer of $99.05 of store credit for a purchase price to the user at $95.00 in response to a desired amount of $100.00. Thus, the store credit marketplace 102 may provide a quote including the first offer for $99.05 at a purchase price of $95.00 with profits to the store credit marketplace 102 of $13.00 and savings to the user of $4.05. It should be understood, that the profit to the store credit marketplace 102 and the savings to the user may vary in different offers and that the store credit marketplace 102 may utilize various thresholds, such as a profit threshold (e.g., a minimum amount of profit per transaction), a savings threshold (e.g., a minimum amount of savings to the user per offer), or a combination thereof to form the offers presented with the credit quote.

In some cases, the store credit marketplace 102 may aggregate the system available store credit and the market available store credit into multiple different combinations or offers. For example, the store credit marketplace 102 may also have system store credit of $20.00 purchased for $15.00 and marketplace store credit of $84.23 available for purchase for $80.00. Thus, the store credit marketplace 102 may form a second offer of $104.23 of store credit for a purchase price to the user at $99.00 in response to a desired amount of $100.00. Thus, the second offer may result in a savings to the user of $5.23 (some or all of which may apply to future purchases at the retail establishment) and a profit to the store credit marketplace 102 of $4.00. In this example, the credit quote may include both the first and second offers.

In some instances, the store credit marketplace 102 may include only one of the first offer and the second offer in the quote. For instance, the store credit marketplace 102 may include preferences or rules, such as provide offers of system store credit before accessing marketplace store credit, only present offers that are equal to or less than the desired amount, present no more than a threshold number of offers in each credit quote (e.g., 2, 3, 4, etc.), include only offers that are within a threshold range (e.g., plus or minus $5) from the desired amount, among others. Thus, if the store credit marketplace 102 was configured to include system store credit quotes when available, in the current example, the credit quote may include only the first offer.

In some cases, the store credit marketplace 102 may utilize the same store credit in multiple combinations. For example, the store credit marketplace 102 may form a third offer using the system store credit $15.80 purchased for $12.00 from the first offer and the marketplace store credit of $84.23 available for purchase for $80.00 from the second offer. In this case, the third offer may be for a total amount of $100.03 for a purchase price of $96.00 resulting in a savings of $4.03 to the user and profits of $4.00 for the store credit marketplace 102.

At 218, the store credit marketplace 102 sends the credit quote to the device 106 and, at 220, the device 106 may receive the credit quote. For example, data representative of the credit quote may be transmitted over one or more networks, including wireless and wired networks, from the device 106 to the store credit marketplace 102. In some cases, the credit quotes received may have a time limit assigned within which the user may purchase the store credit. For instance, the marketplace store credit may be purchased following a request by the user. If the user waited too long to complete the purchase the marketplace store credit may have been sold to another third party. Similarly, the system store credit may be offered to another user of the marketplace 102.

At 222, the user device 106 may receive a credit selection from the user. For instance, the device 106 may present on a display a list of offers associated with the quote. In other instances, the user may enter or type a credit selection using a user interface such as a keyboard, touch pad, microphone, or mouse.

At 224, the device 106 sends the credit selection to the store credit marketplace and, at 226, the store credit marketplace 102 receives the credit selection. In some cases, the offers may be ranked or ordered according to, for example, total savings to the user. The user may select one of the offers presented on the display. The device 106 may also collect and/or send purchase information (e.g., credit card information) to allow the store credit marketplace 102 to receive payment for the store credit indicated by the credit selection.

At 226, the store credit marketplace may process a payment for the store credit. For instance, upon receipt of the credit selection, the store credit marketplace 102 may process the user's 104 payment information for the purchase of the store credit prior to proceeding to 226. In other cases, the store credit marketplace 102 may store payment information associated with the user and automatically process the payment according to the stored payment information in response to receiving a credit selection.

At 228, the store credit marketplace may obtain the store credit associated with the store credit indicated in the credit selection. For example, the store credit marketplace 102 may remove the system store credit from the inventory and/or purchase the market store credit from the third part marketplace, vendor, or individual.

At 230, the store credit marketplace 102 may notify third party credit tracking systems. For instance, the authorization to spend the credit may be associated with a user account at a particular retailer or third party. The store credit marketplace 102 may send instructions to the retailer or third party system to cause the retailer or third party system to associate the store credit with the account of the user following receipt of the credit selection and payment (or payment authorization).

At 232, the store credit marketplace 102 sends a notification of the transfer and any deliverables to the user device 106 and at 234 the device 106 receives the notification and the deliverables. The notification may be to inform the user that the store credit has been associated with the user account at the retailer. The deliverables may include a bar code, QR code, or other identifier that may be utilized by the user to process a transaction using the store credit. For example, if the deliverables include a bar code, the user may be able to cause the device 106 to present the bar code on a display in a manner that a cashier may scan or read in a manner similar to that of a physical gift card.

At 236, the device 106 presents the notification to the user. For example, the device 106 may vibrate, light up, ring, display an icon, or otherwise present the notification to the user. In one instance, the application for purchasing store credit may open in the foreground and present details related to the purchased store credit including instructions on how to complete a transaction using the purchased store credit.

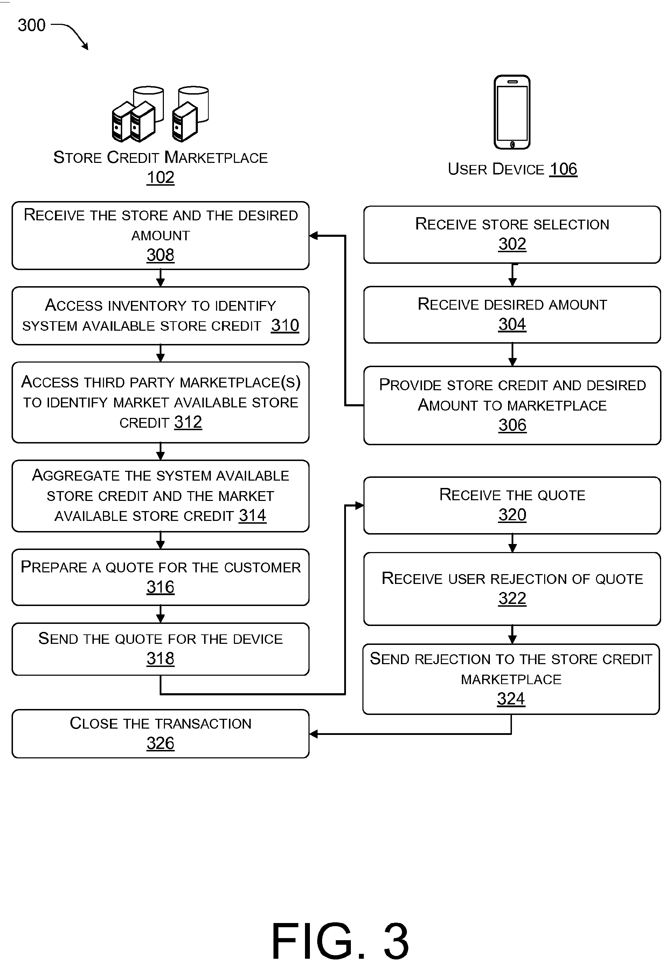

FIG. 3 illustrates another example flow diagram showing an illustrative process 300 for providing store credit to a user according to some implementations. As described above, a store credit marketplace 102 may be configured to allow a customer to access the system (for instance, via user devices 106), purchase a desired amount of credit valid at a third party retailer's establishment, and receive the credit in near real time (e.g., quickly enough for the customer to use the credit to complete a purchase or transaction at the third party retailer before exiting the establishment).

At 302, the device 106 may receive a store selection or a retail establishment selection from a user. For example, the device 106 may host a store credit purchasing application. The application may allow the user to enter (e.g., type or input) a name of a retail establishment. In other examples, the device 106 may present the user with a selectable list of stores or retail establishments that store credit is available for purchase via the application and the store credit marketplace 102. In some cases, the user may sort the list provided by type of industry, type of goods, location, frequently used, most popular, etc. In one example, the user may scan an item or take a picture of an item available for purchase at a store the user is present in and the list may induce a list of stores at which the product is available. In some particular cases, the application may determine the store the user is located in based at least in part, on one or more of, the scanned bar code on the item, an image of the item, an image of the store logo, location data received from the device (for example via a GPS system on the device 106), among others.

At 304, the device 106 receives an input of a desired amount from the user. For example, the user may type or enter the desired amount using a user interface of the device 106. In other examples, the desired amount may be calculated from pricing information obtained when the bar code of the item or items were scanned by the user using the device 106.

At 306, the device 106 sends data representative of the store and the desired amount to the store credit marketplace 102 and, at 308, the store credit marketplace 102 may receive the data representative of the store and the desired amount. For example, the data representative of the store and the desired amount may be transmitted over one or more networks, including wireless and wired networks, from the device 106 to the store credit marketplace 102.

At 310, the store credit marketplace 102 may access inventory to identify available system store credit associated with the store indicated by the data representative of the store. For example, the store credit marketplace 102 may be configured to purchase store credit at specified discount thresholds and to maintain the store credit in one or more inventory databases until a user sends a purchase request to the store credit marketplace 102. For instance, as discussed above, the store credit marketplace 102 may access an internal inventory or inventory list or an external credit database associated with the marketplace 102 to determine the credit available for sale that may be redeemed at the store.

At 312, the store credit marketplace 102 may access one or more third party marketplaces, such as third party marketplaces 112(1)-(J) of FIG. 1, to identify available market store credit that may be purchased by the store credit marketplace 102. For example, the store credit marketplace 102 may access the third party marketplaces 112(1)-(J) to determine if store credit may be obtained at a further discount to the system store credit stored in inventory.

At 314, the store credit marketplace 102 may aggregate the system available store credit and the market available store credit. For example, the store credit marketplace 102 may rank or order the system available store credit and the market available store credit in order of lowest purchase price or greatest discount to the user.

At 316, the store credit marketplace 102 may prepare a credit quote for the user. The credit quote may include multiple offers to purchase the desired amount of store credit or amounts of store credit close to the desired amount. For examples, the store credit marketplace 102 may combine various store credit amounts into offers having a total amount nearest to the desired amount. For instance, the store credit marketplace 102 may combine system store credit of $83.25 purchased for $70.00 with system store credit of $15.80 purchased for $12.00 to form a first offer of $99.05 of store credit for a purchase price to the user at $95.00 in response to a desired amount of $100.00. Thus, the store credit marketplace may provide a quote including the first offer for $99.05 at a purchase price of $95.00 with profits to the store credit marketplace 102 of $13.00 and savings to the user of $4.05. It should be understood, that the profit to the store credit marketplace 102 and the savings to the user may vary in different offers and that the store credit marketplace 102 may utilize various thresholds, such as a profit threshold (e.g., a minimum amount of profit per transaction), a savings threshold (e.g., a minimum amount of savings to the user per offer), or a combination thereof to form the offers presented with the credit quote.

In some cases, the store credit marketplace 102 may aggregate the system available store credit and the market available store credit into multiple different combinations or offers. For example, the store credit marketplace 102 may also have system store credit of $20.00 purchased for $15.00 and marketplace store credit of $84.23 available for purchase for $80.00. Thus, the store credit marketplace 102 may form a second offer of $104.23 of store credit for a purchase price to the user at $99.00 in response to a desired amount of $100.00. Thus, the second offer may result in a savings to the user of $5.23 and a profit to the store credit marketplace 102 of $4.00. In this example, the credit quote may include both the first and second offers.

In some instances, the store credit marketplace 102 may include only one of the first offer and the second offer in the quote. For instance, the store credit marketplace 102 may include preferences or rules, such as provide offers of system store credit before accessing marketplace store credit, only present offers that are equal to or less than the desired amount, present no more than a threshold number of offers in each credit quote (e.g., 2, 3, 4, etc.), include only offers that are within a threshold range (e.g., plus or minus $5) from the desired amount, among others. Thus, if the store credit marketplace 102 was configured to include system store credit quotes when available, in the current example, the credit quote may include only the first offer.

In some cases, the store credit marketplace 102 may utilize the same store credit in multiple combinations. For example, the store credit marketplace 102 may form a third offer using the system store credit $15.80 purchased for $12.00 from the first offer and the marketplace store credit of $84.23 available for purchase for $80.00 from the second offer. In this case, the third offer may be for a total amount of $100.03 for a purchase price of $96.00 resulting in a savings of $4.03 to the user and profits of $4.00.

At 318, the store credit marketplace 102 sends the credit quote to the device 106 and, at 320, the device 106 may receive the credit quote. For example, data representative of the credit quote may be transmitted over one or more networks, including wireless and wired networks, from the device 106 to the store credit marketplace 102. In some cases, the credit quotes received may have a time limit assigned within which the user may purchase the store credit. For instance, the marketplace store credit may be purchased following a request by the user. If the user waited too long to complete the purchase the marketplace store credit may have been sold to another third party. Similarly, the system store credit may be offered to another user of the marketplace 102.

At 322, the device 106 receives the user's rejection of the offers within the quote. For example, the offers may all be for amounts greater than the desired amount indicated, thus, the savings may be less than desirable and so the user may reject the offers within the quote.

At 324, the device 106 sends the rejection to the store credit marketplace. For example, the device 106 may send a notification to the store credit marketplace 102 that the user does not wish to purchase any of the offers presented as part of the quote. In some cases, the device 106 may collect data related to the rejection, such as by asking the user why the offers were rejected or asking the user what offer the user would have accepted, if any.

At 326, the store credit marketplace may close the transaction. For example, the store credit marketplace 102 may reserve or hold store credit associated with the quote for a period of time during which the user may purchase the store credit. In this manner, the store credit marketplace 102 may refrain from selling store credit that that was quoted to the user. However, if the user fails to purchase the store credit or waits longer than the period of time, the store credit marketplace 102 may release the store credit to sale to other individuals.

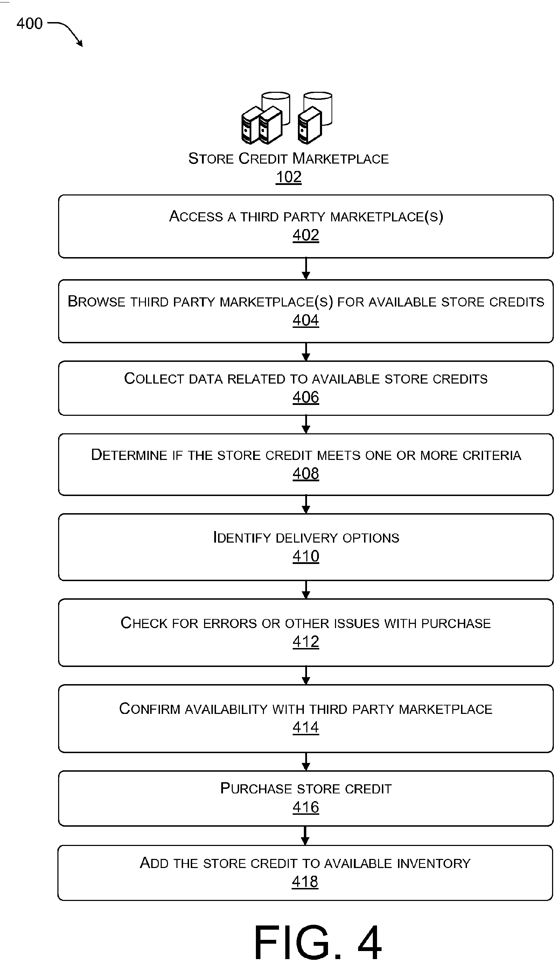

FIG. 4 illustrates an example flow diagram showing an illustrative process 400 for purchasing store credit according to some implementations. For instance, the store credit marketplace 102 or a module associated with the store credit marketplace 102 may constantly, consistently, periodically, or occasionally, search for store credit to purchase and convert to inventory store credit that may be used to fulfill store credit requests from various users. Thus, the process 400 may provide one example for purchasing store credit from third party marketplaces 112(1)-(j) and other retailers. For example, the store credit marketplace 102 may access a retailer's online portal or a third party marketplace 112 to determine if store credit is being offered for sale or a reduced price.

At 402, a purchasing module associated with the store credit marketplace 102 may access a third party marketplace. For example, the store credit marketplace 102 may access a website or e-commerce platform over a network, such as the Internet. In some cases, the third party marketplace may be online retailers that make store credit or gift cards for use at the retailer available for sale online at a discount. In other examples, the third store credit marketplace may be a retailer, such as Costco®, that makes available other parties' store credit or gift cards for a discount. In still other examples, the third party marketplace may be a marketplace in which individuals may sell discounted store credit to other individuals.

At 404, the purchasing module may browse the third party marketplace for available store credit and, at 406, the purchasing module may collect data related to the available store credits. The purchasing module may visit a page associated with each offer of store credit for one or more selected retailers. For example, the store credit marketplace 102 may have a depleted supply of store credit for a particular retailer. The purchasing module may collect data related to the available store credit associated with the particular retailer from the third party marketplace.

At 408, the purchasing module may determine if any of the store credit available to purchase meets one or more criteria. For example, the purchasing module may determine if a discount (e.g., the face value minus the purchase price) of the store credit is greater than a discount threshold, if the amount of store credit is greater than an amount threshold (e.g., greater than 100% worth of store credit), if the store credit meets a retailer threshold or a type of retailer threshold (e.g., the retailer associated with the store credit is a hardware store, grocery store, etc.). In some cases, the one or more criteria may be related to a current quote (e.g., a request for $100 worth of Macy's® store credit was received from a user). In other cases, the one or more criteria may be related to inventory store credit (e.g., the total inventory store credit for a particular retailer is below an inventory threshold).

In some implementations, the one or more criteria may include an automatic purchase criteria by the purchasing module (e.g., the discount is greater than a first discount threshold) and a notification to purchase threshold (e.g., the discount is greater than a second threshold but less than the first threshold). The notification threshold may cause the purchasing module to notify an administrator associated with the store credit marketplace that the credit is available and may be a desirable purchase, which allows the administrator to make the final purchase decision.

At 410, the purchasing module may identify delivery options. For example, the store credit may be associated with a physical gift card, a user account, or in an electronic format. In some cases, the purchasing module may be configured to purchase store credit that may be delivered via email, to a user account, or in other electronic manners and to reject store credit that requires receipt of a physical gift card. In other cases, the store purchasing module may select the least expensive delivery method or include a cost of the deliver when determining the discount to compare with the discount threshold.

At 412, the purchasing module may check for errors or other issues with the purchase. For example, the purchasing module may determine a rating associated with an individual offering the store credit for sale on a third party marketplace. If the individual has a rating below an individual rating threshold, delivery time over a delivery time threshold, rating of the third party marketplace below a marketplace rating threshold, poor performance on previous purchase from the same individual, length of time associate width a credit guarantee, inclusion on a black list of individuals or third party marketplaces, or there are other indicators that there may be an issue with delivery or transfer of the store credit, the purchasing module may cancel the order.

At 414, the purchasing module may confirm the availability with the third party marketplace. For example, the purchasing module may confirm that the store credit is actually available, has not previously been sold, and that the individual offering the store credit for sale is in good standing with the third party marketplace.

At 416, the purchasing module may purchase the store credit from the third party marketplace on behalf of the store credit marketplace and, at 418, the purchasing module may cause the store credit to be added to the available inventory. For example, the purchasing module may update a record or index associated with the available inventory to notify the store credit marketplace that the new store credit is available. In other examples, the purchasing module may cause the store credit to transfer to the purchasers via the third party credit tracking system or to an account associated with the store credit marketplace at the retailer.

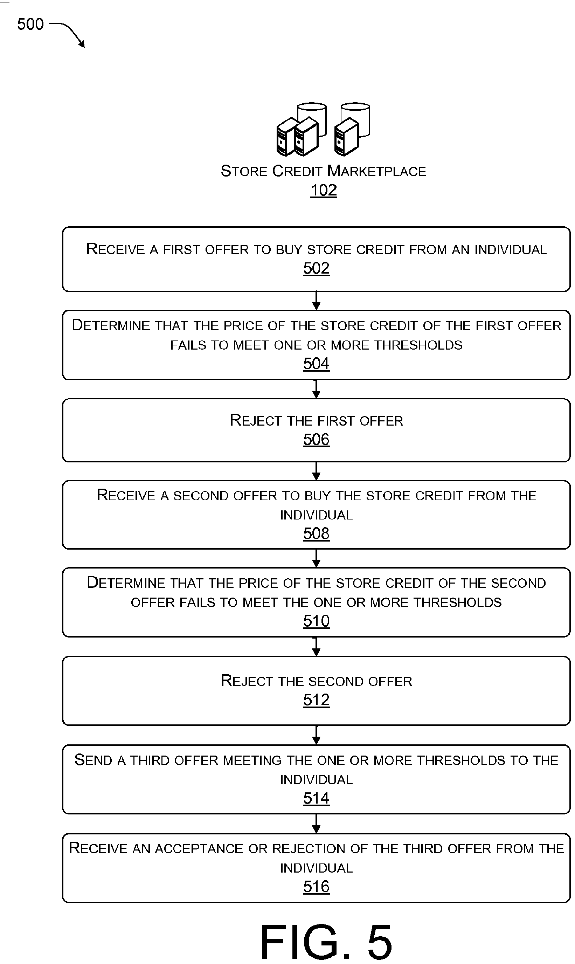

FIG. 5 illustrates another example flow diagram showing an illustrative process 500 for purchasing store credit according to some implementations. For instance, an individual may offer store credit or physical gift cards to the store credit marketplace 102 for redemption as cash, other store credit, promotional offers, discounts, coupons, items, merchandise, or other benefits. In some cases, the individual may receive a benefit today or at a later date. In general, the store credit marketplace 102 may be configured to accept offers at a discounted rate compared to the face value of the store credit and/or to accept offers to purchase store credit for retailers at which the inventory store credit is limited or depleted below an inventory minimum threshold.

At 502, the store credit marketplace 102 may receive a first offer to buy store credit from an individual. For example, the individual may access the store credit marketplace 102 via an application operating on the individual's device 106. The individual may scan a bar code of a physical gift card or otherwise enter a credit identifier (such as a numerical ID) usable by the store credit marketplace 102 to look up and/or transfer store credit. In some instances, the application may load the retailer ID, the value (e.g., the total amount of store credit associated with the identifier), and other information when the gift card is scanned or the credit identifier is entered. In other cases, the application may allow the individual to enter or type the value and retailer ID. The application may also allow the individual to enter a price or an amount the individual would like from the store credit marketplace 102 in exchange for the store credit. In some cases, the store credit marketplace 102 may receive the value, the retailer ID, other information associated with the store credit, and the price as the offer.

At 504, the store credit marketplace 102 may determine that the price of the store credit of the first offer fails to meet a threshold. For example, the threshold may be a discount threshold and the price may be too high when compared to the value of the store credit such that the store credit marketplace 102 would be unable to re-offer the store credit for sale at a minimum discounted level. In other cases, the inventory store credit for the retailer may be over an inventory maximum threshold and the store credit marketplace 102 may reject the offer as such.

At 506, the store credit marketplace 102 rejects the first offer. In some cases, if the offer does not meet at least one threshold the offer may be rejected. In other cases, if the store credit does not meet each of the thresholds, the store credit marketplace 102 may reject the offer.

At 508, the store credit marketplace 102 may receive a second offer to buy store credit from the device 106 associated with the individual. For example, the individual may receive the rejection of the offer via the application on the device 106. In some examples, the individual may be able to provide another offer with a lower price than the first offer to see if the store credit marketplace 102 would accept the second offer.

At 510, the store credit marketplace 102 may determine that the price of the store credit of the second offer fails also to meet a threshold. Again, the threshold may be a discount threshold and the price may still be too high when compared to the value of the store credit. In other cases, the inventory store credit for the retailer may still be over an inventory maximum threshold and the store credit marketplace 102 may reject the offer as such.

At 512, the store credit marketplace 102 rejects the second offer. In some cases, store credit marketplace 102 may provide a rationale, reason, or notice associated with the rejection. For example, the notice may state that the store credit marketplace 102 is not currently buying store credit associated with the retailer or that the offer price was too low. In this manner, the individual is able to determine if the rejection is based on a criteria within the individual's ability to modify (such as the price).

At 514, the store credit marketplace 102 may send a third offer meeting the one or more thresholds to the individual. For example, the store credit marketplace 102 may respond to the first offer or second offer with an acceptance. In some cases, the store credit marketplace 102 may have a limit based on a number of responses to the offers, a threshold price increase between responses or offers, etc.

At 516, the store credit marketplace 102 receives an acceptance or a rejection of the third offer from the individual. For example, the individual may receive the offer and find it acceptable and indicate using the application on the device 106 that the individual approves the sale of the store credit to the store credit marketplace 102. Alternatively, the individual may decide to keep the store credit based on the price associated with the third offer. In this example, the individual may indicate using the application on the device 106 that the individual declines the third offer. In another example, the individual may close the application or wait more than a predetermined period of time associated with the third offer causing the third offer to expire.

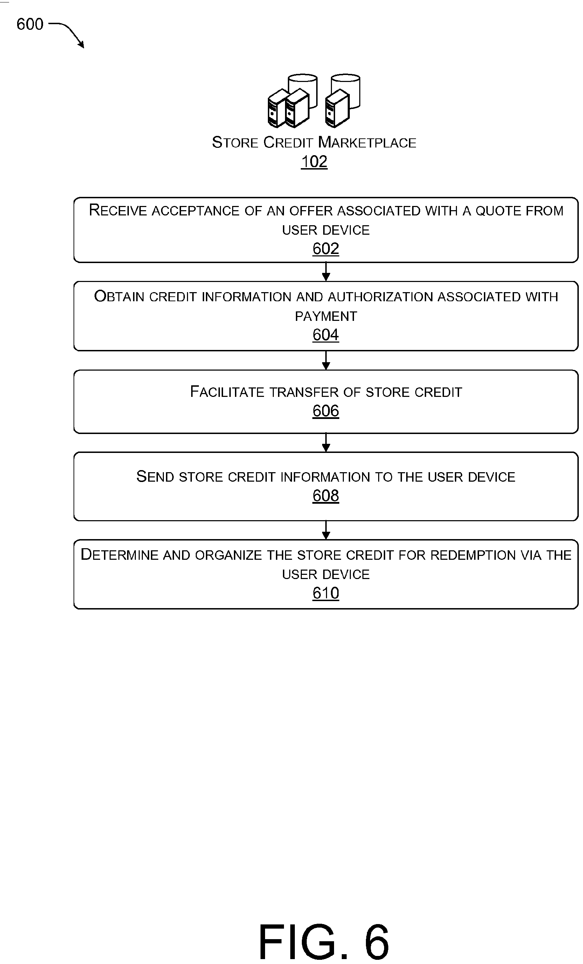

FIG. 6 illustrates another example flow diagram showing an illustrative process 600 for processing an authorized store credit transaction according to some implementations. As described above, a store credit marketplace 102 may be configured to allow a customer to access the system (for instance, via devices 106), purchase a desired amount of credit valid at a third party retailer's establishment, and receive the credit in near real time (e.g., quickly enough for the customer to use the credit to complete a purchase or transaction at the third party retailer before exiting the establishment).

At 602, the store credit marketplace 102 may receive an acceptance of an offer within a quote from the user device 106. For example, the individual may receive the offer and find it acceptable and indicate, using the application on the device 106, that the individual approves the sale of the store credit to the store credit marketplace 102.

At 604, the store credit marketplace 102 may obtain credit information and authorization associated with payment for the store credit. For example, the user may have entered credit card information or other payment information into the device 106 for transmission to the store credit marketplace 102. In other cases, the store credit marketplace 102 may look up or access the payment information associated with an account of the user.

At 606, the store credit marketplace 102 may facilitate transfer of store credit to the user. For example, the store credit marketplace 102 may cause the transfer of store credit at a third party credit tracking system (e.g., via an account of the user with the retailer at which the store credit is redeemable). In other cases, the store credit marketplace 102 may prepare a bar code or identifier that may be sent to the device 106 in a manner that the user may redeem the store credit via the device 106.

At 608, the store credit marketplace 102 may send the store credit information to the user device 106. For example, the store credit marketplace 102 may send a notification that the store credit has been applied to the user account at the store.

At 610, the store credit marketplace 102 may determine and organize the store credit for redemption via the user device 106. In some examples, the store credit marketplace 102 may convert the store credit into a bar code, QR code, identifier, or other format that may be presented to a cashier at the retail establishment to redeem the store credit. The store credit marketplace 102 may then send the converted store credit to the user device 106.

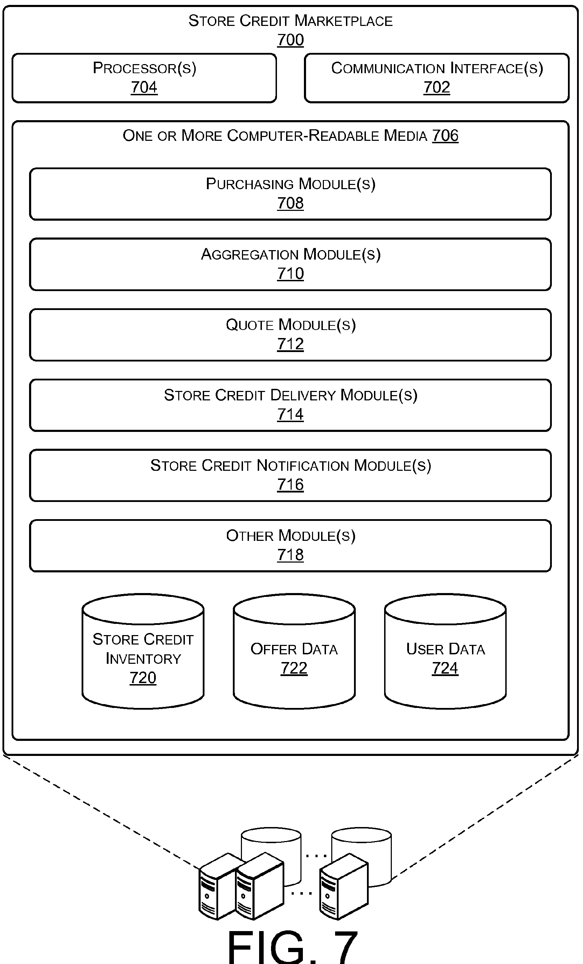

FIG. 7 illustrates an example store credit marketplace 700 for providing a store credit marketplace, such as store credit marketplace 102, according to some implementations. For example, the store credit marketplace 700 may provide a platform for the sale of electronic gift cards, value cards, and/or store credit to individuals. In some cases, the store credit marketplace 700 may allow a customer to access the marketplace (for instance, via a smart phone or other electronic device), purchase a desired amount of store credit valid at a third party retailer's establishment, and receive the store credit in near real time. In some cases, the store credit marketplace 700 facilities both a discount (e.g., the store credit is sold at or below face value by other individuals that have no use for the credit) and to allow for the electronic transfer of store credit via a single platform.

In the illustrated example, the store credit marketplace system 700 includes one or more communication interfaces 702 configured to facilitate communication between one or more networks, one or more cloud-based system (e.g., third party marketplaces 112 and/or third party credit tracking systems 110 of FIG. 1), and/or one or more end user devices (e.g., devices 106 of FIG. 1). The communication interfaces 702 may also facilitate communication between one or more wireless access points, a master device, and/or one or more other computing devices as part of an ad-hoc or home network system. The communication interfaces 702 may support both wired and wireless connection to various networks, such as cellular networks, radio, WiFi networks, short-range or near-field networks (e.g., Bluetooth®), infrared signals, local area networks, wide area networks, the Internet, and so forth.

The store credit marketplace 700 includes one or more processors 704, such as at least one or more access components, control logic circuits, central processing units, or processors, as well as one or more computer-readable media 706 to perform the function of the store credit marketplace 700 and/or store content. Additionally, each of the processors 704 may itself comprise one or more processors or processing cores.

Depending on the configuration, the computer-readable media 706 may be an example of tangible non-transitory computer storage media and may include volatile and nonvolatile memory and/or removable and non-removable media implemented in any type of technology for storage of information such as computer-readable instructions or modules, data structures, program modules or other data. Such computer-readable media may include, but is not limited to, RAM, ROM, EEPROM, flash memory or other computer-readable media technology, CD-ROM, digital versatile disks (DVD) or other optical storage, magnetic cassettes, magnetic tape, solid state storage, magnetic disk storage, RAID storage systems, storage arrays, network attached storage, storage area networks, cloud storage, or any other medium that can be used to store information and which can be accessed by the processors 704.

Several modules such as instruction, data stores, and so forth may be stored within the computer-readable media 706 and configured to execute on the processors 704. For example, as illustrated, the computer-readable media 706 stores a purchasing module 708, an aggregation module 710, a quote module 712, a store credit delivery module 714, a store credit notification module 716, as well as other modules 718 (such as an operating module or system). The computer-readable media 706 may also be configured to store data, such as store credit inventory 720, outstanding offer data 722, and/or user data 724.

The purchasing module 708 may be configured to access various web-site and/or platforms to identify store credit to purchase and add to inventory. For instance, the purchasing module 708 may be configured as a web-crawler that searches the third party marketplaces and web-sites to identify store credit meeting specific criteria or thresholds and to order the store credit when the criteria or thresholds are met.

The aggregation module 710 may be configured to generate offers that may be included in a credit quote in response to receiving a requested amount of store credit at a specified retailer. For example, the aggregation module 710 may combine various individual store credits into a package to approximate the amount requested. In some cases, the aggregation module 710 may identify store credit available in inventory as well as at various third party marketplaces.

The quote module 712 may combine the various offers generated by the aggregation module 710 into a quote and provide the quote to the user device. For example, the quote module 712 may be configured to process user acceptance of an offer associated with a quote and to accept or reject offers made by the user to the store credit marketplace 700.

The store credit delivery module 714 may be configured to transfer the store credit to the user. For example, the store credit delivery module 714 may notify a third party store credit tracking system that the user is the new owner of the store credit. In some cases, the store credit delivery module 714 may cause the store credit to be associated with a user account at a retailer after the store credit is purchased. In yet other examples, the store credit delivery module 714 may be configured to convert the store credit into other formats such as a bar code.

The store credit notification module 716 may be configured to notify the user that the store credit has been transferred. For example, the store credit notification module 716 may send a bar code or other identifier in a manner that may be sent to the user device and redeemed by presenting the device or a display of the device to the cashier at checkout.

As discussed above, the computer-readable media 706 may also be configured to store data, such as store credit inventory data 720, outstanding offer data 722, and/or user data 724. In some cases, the store credit inventory data 720 may include an index of store credit available for sale by the store credit marketplace 700 and/or the data usable to redeem or transfer the store credit to another individual and/or entity. The outstanding offer data 722 may include a list of the store credit associated with current offers, a period of time in which the offers may expire, an individual the offer was presented too, among others. The user data 724 may include user demographic information, user account information, user purchase history, etc.

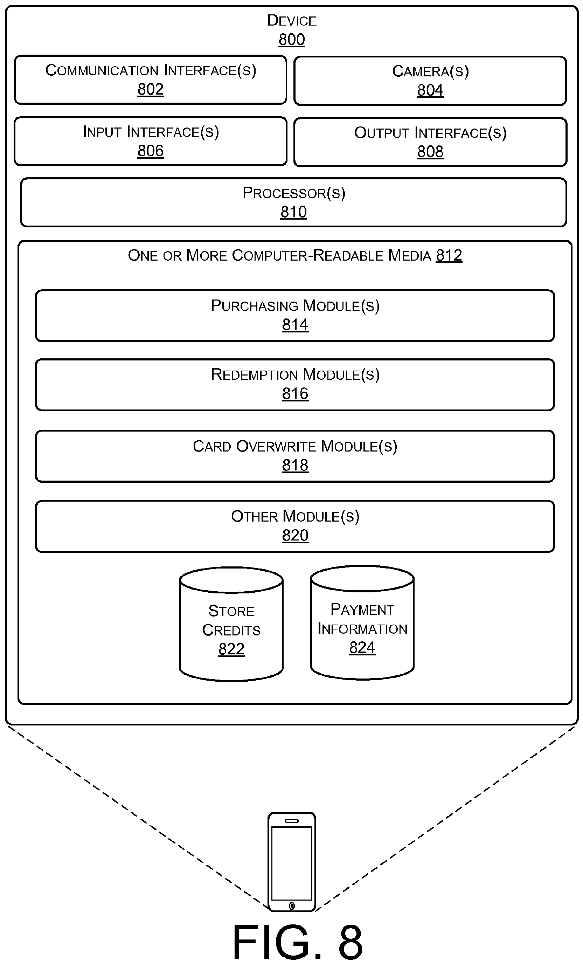

FIG. 8 illustrates an example device 800 for accessing the store credit marketplace according to some implementations. For example, the user device 800 may be a mobile phones, smart phones, laptop computers, mobile computers, tablets, smarts rings, smart watches, other wearables, biometrics, desktop computers, or other computing device that the user may install applications. In some specific cases, the user device 800 may be a mobile device the user may access while shopping on site at a physical retailer establishment, as illustrated above with respect to the device 106 of FIG. 1.

In the illustrated example, the device 800 includes one or more communication interfaces 802 configured to facilitate communication between one or more networks, one or more cloud-based system (e.g., the store credit marketplace 102 of FIG. 1). The communication interfaces 802 may also facilitate communication between one or more wireless access points, a master device, and/or one or more other computing devices as part of an ad-hoc or home network system. The communication interfaces 802 may support both wired and wireless connection to various networks, such as cellular networks, radio, WiFi networks, short-range or near-field networks (e.g., Bluetooth®), infrared signals, local area networks, wide area networks, the Internet, and so forth.

The device 800 may also include at least one camera 804 for capturing visual data from the environment. For example, the camera 804 may be configured to scan or capture an image of a bar code or other identifier associated with a retail item for sale. The cameras 804 may be of various sizes and quality, for instance, the cameras 804 may include one or more wide screen cameras, three dimensional (3D) cameras, high definition cameras, video cameras, among other types of cameras. However, it should be understood, that in some implementations, the device 800 may not include a camera 804 or other image components.

The device 800 also includes input interfaces 806 and the output interface 808 may be included to display or provide information to a user and to receive user inputs from of the end user. The interfaces 806 and 808 may include various systems for interacting with the device 800, such as mechanical input devices (e.g., keyboards, mice, buttons, etc.), displays, input sensors (e.g., motion, age, gender, fingerprint, facial recognition, or gesture sensors), and/or microphones for capturing natural language input such as speech. In some examples, the input interface 806 and the output interface 808 may be combined in one or more touch screen capable displays.

The user device 800 includes one or more processors 810, such as at least one or more access components, control logic circuits, central processing units, or processors, as well as one or more computer-readable media 812 to perform the functions of a store credit application operating on the device 800 and/or store content associated with the store credit application. Additionally, each of the processors 810 may comprise one or more processors or processing cores.

Depending on the configuration, the computer-readable media 812 may be an example of tangible non-transitory computer storage media and may include volatile and nonvolatile memory and/or removable and non-removable media implemented in any type of technology for storage of information such as computer-readable instructions or modules, data structures, program modules or other data. Such computer-readable media may include, but is not limited to, RAM, ROM, EEPROM, flash memory or other computer-readable media technology, CD-ROM, digital versatile disks (DVD) or other optical storage, magnetic cassettes, magnetic tape, solid state storage, magnetic disk storage, RAID storage systems, storage arrays, network attached storage, storage area networks, cloud storage, or any other medium that can be used to store information and which can be accessed by the processors 810.

Several modules such as instruction, data stores, and so forth may be stored within the computer-readable media 812 and configured to execute on the processors 810. For example, as illustrated, the computer-readable media 812 stores a purchasing module 814, a redemption module 816, a card overwrite module 818, as well as other modules 820 (such as a device operating system). The computer-readable media 812 may also be configured to store data, such as store credit data 822 (e.g., store credit redemption information associated with previously purchased store credit) and payment information 824 (e.g., information usable to process payments associated with the purchase of store credit).

The purchasing module 814 may be configured to exchange data via the communication interface 802 with a store credit marketplace to facilitate the purchase of store credit usable at a retail establishment. For example, the purchasing module 814 may allow the user to select a retailer and enter an amount of store credit desired via the input interface 806 and/or the camera 804. For example, the user may enter the retailer name and amount via a touch screen capable display. In another example, the purchasing module 814 may cause the camera 804 to capture one or more images of a retail product or a retail product identifier and the purchasing module 814 may analyze the image to determine the retailer and the desired amount, as described above. In some instances, the purchasing module 814 may determine the retailer and the desired amount based on the image via one or more networks, such as the Internet®.

The purchasing module 814 may also be configured to send the retailer and the amount to the store credit marketplace and to receive a quote including one or more offers for the user to purchase various amounts of store credit at various prices. The purchasing module 814 may also allow the user to accept or reject any or all of the various offers within the quote. In some specific examples, the purchasing module 814 may cause the output interface 808 to display a timer associated with an expiration of the quote.

The redemption module 816 may be configured to receive data from the store credit marketplace via the communication interface 802 that may be utilized to redeem the store credit with a cashier at the retail establishment. In some cases, the redemption module 816 may be configured to convert the store credit into a bar code or other format that may be scanned by the cashier at the retail establishment.

The card overwrite module 818 may be configured to overwrite or add value to an electronic payment card, such as a gift card. For example, the device 800 may include a removable card writer/reader, such as a programmable chip writer/reader or a magnetic strip writer/reader that may be coupled to the device 800. The card overwrite module 818 may cause the card writer to store data representative of the store credit on a reusable gift card. The user may then present the gift card to the cashier at the retailer to redeem the store credit for merchandise.

Although the subject matter has been described in language specific to structural features and/or methodological acts, it is to be understood that the subject matter defined in the appended claims is not necessarily limited to the specific features or acts described. Rather, the specific features and acts are disclosed as exemplary forms of implementing the claims.

Also disclosed is a system comprising one or more communication interfaces to communicate with a user device, one or more processors, and computer-readable storage media storing computer-executable instructions, which when executed by the one or more processors cause the one or more processors to receive a request for a desired amount of store credit redeemable at specified retailers from the user device via the one or more communication interfaces, access an inventory to identify a first set of units of store credit associated with the specified retailer, individual units of first the first set of units of the store credit having a price paid and a redemption value at the specified retailers, determine that a first redemption amount equal to a sum of the redemption value of the first set of units, determine the first redemption amount is within a threshold value of the desired amount to cause the first redemption amount to approximate the desired amount, forming a first offer including the first set of units of store credit associated with the specified retailers, determine a first purchase price associated the first offer, the first purchase price greater than a sum of the price paid of the first set of the units of store credit associated with the first offer and less than the first redemption amount, send the first offer to the user device, receive from the device data indicating a selection of the first offer, and in response to receiving the selection of the first offer, send information usable to redeem the first redemption amount from the specified retailers to the device.

Optionally, the computer-readable storage media stores additional computer-executable instructions, which when executed by the one or more processors cause the one or more processors to access an inventory to identify a second set of units of store credit associated with the specified retailer, individual units of second the first set of units of the store credit having a price paid and a redemption value at the specified retailers, determine a second redemption amount equal to a sum of the redemption value of the second set of units, determine that the second redemption amount is within the threshold value of the desired amount to cause the second redemption amount to approximate the desired amount, forming a second offer including the second set of units of store credit associated with the specified retailers, and send the second offer with the first offer to the user device.

Optionally, the first set of units includes one unit.

Optionally, the computer-readable storage media stores additional computer-executable instructions, which when executed by the one or more processors cause the one or more processors to access a third party store credit marketplace to identify additional units of store credit associated with the specified retailers, individual additional units of store credit having a price paid and a redemption value at the specified retailers, and wherein the first set of units includes at least one of the additional units.

Optionally, the computer-readable storage media stores additional computer-executable instructions, which when executed by the one or more processors cause the one or more processors to cause a third party tracking system to associate the first set of units with a user of the user device prior to sending the information usable to redeem the first redemption amount from the specified retailers to the user device.

Optionally, the computer-readable storage media stores additional computer-executable instructions, which when executed by the one or more processors cause the one or more processors to cause a retailer system to associate the first set of units with a user account of a user of the user device prior to sending the information usable to redeem the first redemption amount from the specified retailer to the user device.

Optionally, the computer-readable storage media stores additional computer-executable instructions, which when executed by the one or more processors cause the one or more processors to generate an identifier usable to redeem the first redemption amount, and wherein the information usable to redeem the one or more units of store credit includes the identifier.

Optionally, the identifier is in a format which may be scanned by a retail point of sale system.

Also disclosed is a method comprising receiving a request for a desired amount of store credit redeemable at a retailer from a device, generating a first offer, generating the first offer including selecting a first set of units of store credit redeemable at the retailer based at least in part to cause a total value of the first set of units associated with the retailer to approximate the desired amount within a threshold amount of the desired amount, determining that the total value of the first set of units is greater than a sum of a price paid for each of the units of the first set of units plus a desired discount, determining a first purchase price based at least in part on the desired discount and the sum of the price paid for each of the units of the first set of units, sending the first offer to the device, receiving a selection of the first offer, and in response to receiving the selection of the first offer, sending information usable to redeem the total value of the first set of units from the retailer.

Optionally, the method further comprises generating a second offer, generating the second offer including selecting a second set of units of store credit redeemable at the retailer based at least in part to cause a second total value of the second set of units associated with the retailer to approximate the desired amount within the threshold amount of the desired amount, determining that the second total value of the second set of units is greater than a second sum of a price paid for each of the units of the second set of unit plus the desired discount, determining a second purchase price based at least in part on the desired discount and the second sum of the price paid for each of the units of the second set of units, sending the second offer to the device with the first offer.

Optionally, the method further comprises causing a third party tracking system to associate the first set of units with a user of the device.

Optionally, the method further comprises causing a retailer system to associate the first set of units with a user account.

Optionally, the method further comprises generating an identifier usable to redeem the total value, and wherein the information usable to redeem the total value includes the identifier.

Optionally, the identifier is in a format which may be scanned by a retail point of sale system.

Also disclosed is a one or more non-transitory computer-readable media having computer-executable instructions that, when executed by one or more processors, cause the one or more processors to perform operations comprising receiving a request for a desired amount of store credit redeemable at a retailer from a device, generating a first offer, the first offer including a first set of units of store credit selected from an inventory of units, each of the units of store credit in the inventory of units having a value redeemable at the retailer and a price paid, the first offer having a first purchase price greater than a first sum of a price paid of each of the units in the first set of units and less than a second sum of the value of each of the units in the first set of units, generating a second offer, the second offer including a second set of units of store credit selected from the inventory of units, the second offer having a second purchase price greater than a third sum of a price paid of each of the units in the second set of units and less than a fourth sum of the value of each of the units in the second set of units, generating a quote including the first offer and the second offer, sending the quote to the device, receiving a selection of the first offer from the device, and in response to receiving the selection of the first offer, sending information usable to redeem the second sum from the retailer.

Optionally, at least one of the units in the first set of units is also in the second set of units.

Optionally, the second sum of the value of each of the units in the first set of units is different from the fourth sum of the value of each of the units in the second set of units.

Optionally, the first set of units are selected to cause the second sum of the value of each of the units in the first set of units to approximate the desired amount, and the second set of units are selected to cause the fourth sum of the value of each of the units in the second set of units to approximate the desired amount.

Optionally, the one or more computer-readable media has computer-executable instructions that, when executed by the one or more processors, cause the one or more processors to perform operations comprising preventing the units in the first set of units and the units in the second set of units from being used in a quote sent to another device for a pried of time.

Optionally, the purchase price is selected base at least in part on a profit threshold.

## Claims

1. A system comprising:
one or more communication interfaces to communicate with a user device;
one or more processors; and
computer-readable storage media storing computer-executable instructions, which when executed by the one or more processors cause the one or more processors to:
receive a request for a desired amount of store credit redeemable at specified retailers from the user device via the one or more communication interfaces;
access an inventory to identify a first set of units of store credit associated with the specified retailer, individual units of first the first set of units of the store credit having a price paid and a redemption value at the specified retailers;
determine that a first redemption amount equal to a sum of the redemption value of the first set of units;
determine the first redemption amount is within a threshold value of the desired amount to cause the first redemption amount to approximate the desired amount;
forming a first offer including the first set of units of store credit associated with the specified retailers;
determine a first purchase price associated the first offer, the first purchase price greater than a sum of the price paid of the first set of the units of store credit associated with the first offer and less than the first redemption amount;
send the first offer to the user device.

2. The system as recited in claim 1, wherein the computer-readable storage media stores additional computer-executable instructions, which when executed by the one or more processors cause the one or more processors to:
receive from the device data indicating a selection of the first offer; and
in response to receiving the selection of the first offer, send information usable to redeem the first redemption amount from the specified retailers to the device.

3. The system as recited in any preceding claim, wherein the computer-readable storage media stores additional computer-executable instructions, which when executed by the one or more processors cause the one or more processors to:
access an inventory to identify a second set of units of store credit associated with the specified retailer, individual units of second the first set of units of the store credit having a price paid and a redemption value at the specified retailers;
determine a second redemption amount equal to a sum of the redemption value of the second set of units;
determine that the second redemption amount is within the threshold value of the desired amount to cause the second redemption amount to approximate the desired amount;
forming a second offer including the second set of units of store credit associated with the specified retailers; and
send the second offer with the first offer to the user device.

4. The system as recited in any preceding claim, wherein the first set of units includes one unit.

5. The system as recited in any preceding claim, wherein the computer-readable storage media stores additional computer-executable instructions, which when executed by the one or more processors cause the one or more processors to:
access a third party store credit marketplace to identify additional units of store credit associated with the specified retailers, individual additional units of store credit having a price paid and a redemption value at the specified retailers; and
wherein the first set of units includes at least one of the additional units.

6. The system as recited in any preceding claim, wherein the computer-readable storage media stores additional computer-executable instructions, which when executed by the one or more processors cause the one or more processors to:
cause a third party tracking system to associate the first set of units with a user of the user device prior to sending the information usable to redeem the first redemption amount from the specified retailers to the user device.

7. The system as recited in any preceding claim, wherein the computer-readable storage media stores additional computer-executable instructions, which when executed by the one or more processors cause the one or more processors to:
cause a retailer system to associate the first set of units with a user account of a user of the user device prior to sending the information usable to redeem the first redemption amount from the specified retailer to the user device.

8. The system as recited in any preceding claim, wherein the computer-readable storage media stores additional computer-executable instructions, which when executed by the one or more processors cause the one or more processors to:
generate an identifier usable to redeem the first redemption amount; and
wherein the information usable to redeem the one or more units of store credit includes the identifier.

9. The system as recited in claim 8, wherein the identifier is in a format which may be scanned by a retail point of sale system.

10. A method comprising:
receiving a request for a desired amount of store credit redeemable at a retailer from a device;
generating a first offer, generating the first offer including:
selecting a first set of units of store credit redeemable at the retailer based at least in part to cause a total value of the first set of units associated with the retailer to approximate the desired amount within a threshold amount of the desired amount;
determining that the total value of the first set of units is greater than a sum of a price paid for each of the units of the first set of units plus a desired discount;
determining a first purchase price based at least in part on the desired discount and the sum of the price paid for each of the units of the first set of units;
sending the first offer to the device;
receiving a selection of the first offer; and
in response to receiving the selection of the first offer, sending information usable to redeem the total value of the first set of units from the retailer.

11. The method as recited in claim 10, further comprising:
generating a second offer, generating the second offer including:
selecting a second set of units of store credit redeemable at the retailer based at least in part to cause a second total value of the second set of units associated with the retailer to approximate the desired amount within the threshold amount of the desired amount;
determining that the second total value of the second set of units is greater than a second sum of a price paid for each of the units of the second set of unit plus the desired discount;
determining a second purchase price based at least in part on the desired discount and the second sum of the price paid for each of the units of the second set of units;
sending the second offer to the device with the first offer.

12. The method as recited in claim 10 or 11, further comprising:
causing a third party tracking system to associate the first set of units with a user of the device.

13. The method as recited in any of claims 10 to 12, further comprising:
causing a retailer system to associate the first set of units with a user account.

14. The method as recited in any of claims 10 to 13, further comprising:
generating an identifier usable to redeem the total value; and
wherein the information usable to redeem the total value includes the identifier.

15. The method as recited in claim 14, wherein the identifier is in a format which may be scanned by a retail point of sale system.
